(19) Europäisches Patentamt
European Patent Office
Office européen des brevets

(11) **EP 3 454 538 A1**

(12) **EUROPEAN PATENT APPLICATION**

(43) Date of publication:
**13.03.2019 Bulletin 2019/11**

(51) Int Cl.:
***H04N 1/60*** *(2006.01)*

(21) Application number: **17306161.5**

(22) Date of filing: **08.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **PASCAL, Lucas**
**31071 Toulouse Cedex 7 (FR)**
• **PUY, Gilles**
**35576 Cesson-Sévigné (FR)**

• **DEMOULIN, Vincent**
**35576 Cesson-Sévigné (FR)**
• **LEFEBVRE, Frédéric**
**35576 Cesson-Sévigné (FR)**

(74) Representative: **Vidon Brevets & Stratégie**
**16B, rue de Jouanet**
**BP 90333**
**35703 Rennes Cedex 7 (FR)**

Remarks:
A request for correction of drawings has been filed pursuant to Rule 139 EPC. A decision on the request will be taken during the proceedings before the Examining Division (Guidelines for Examination in the EPO, A-V, 3.).

(54) **METHOD FOR DETERMINING A TRANSFER FUNCTION ADAPTED TO BE USED FOR COLOR GRADING A VISUAL CONTENT AND CORRESPONDING ELECTRONIC DEVICE, SYSTEM, COMPUTER READABLE PROGRAM PRODUCT AND COMPUTER READABLE STORAGE MEDIUM**

(57) The disclosure relates to a method comprising: determining a transfer function between a source color set and a reference color set, the transfer function satisfying a color mapping constraint between an element of the source color set and an element of the reference color set;
interpolating the transfer function to unconstrained elements of the source color set, the interpolating taking account of a color proximity inside the source color set;
extrapolating the interpolated transfer function to a color element not belonging to the source color set.

It also relates to corresponding electronic device, system, computer readable program product and storage medium.

Figure 4

**Description**

**1. Technical field**

The present disclosure relates to the field of color grading of digital visual content.

A method for determining a transfer function adapted to be used for color grading a digital visual content, and corresponding electronic device, system, computer readable program product and computer readable storage medium are described.

**2. Background art**

Color grading is the process of altering and enhancing the colors of, for example, a motion picture, video image, or still image, either electronically, photo-chemically or digitally.

For instance, a user (like a visual artist or a user of an image processing device) can change the colors of a source image in order that it looks like to the color characteristics (also called "color look") of a reference image, while preserving the content of the source image. The source image can be for instance a still image acquired from a camera of a smart phone or a tablet, or a frame of a video sequence.

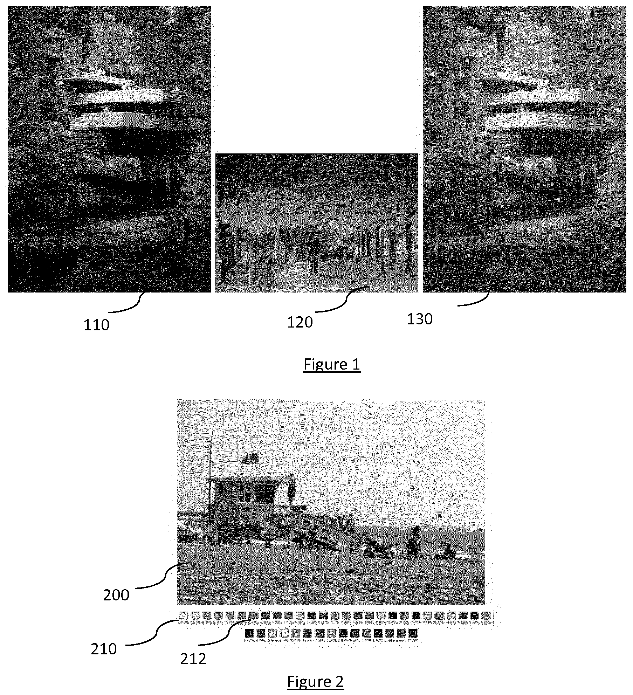

Figure 1 illustrates an application of a Color transfer on a source image 110 (left) based on a reference image 120 (middle). The resulting image 130 is presented on the right.

Modern color grading (color correction or remastering), for instance for theatrical film, video distribution, or print, is generally done digitally in a color suite.

There are many ways of selecting a target color for a mapping with a part of an image with a color suite. For instance, the target color can be chosen "manually", by a user selection. Freely choosing the target color can permit a user to select the target color that corresponds the best to its expectation in terms of transferred color look (like the fulfilling of an artistic criteria). However, when the grading involves different target colors defined for different parts of the image, the result of the color grading can sometimes be not exactly in line with the user expectation. Indeed, some mapping can lead to strong artefacts in the graded image. Such discontinuity can appear notably if two close colors of the image are mapped with two very distinct colors.

The use of an automatic mapping between colors can permit to obtain a resulting image with few artefacts. However, such an automatic processing does not take into account a feeling of a user, like an artistic criterion. Thus, the result can also be very different of what is expected by a user.

So, there is a need for a solution that helps obtaining a graded image without or with less artefacts than some solutions of the prior art while taking into account, at least partially, the willingness of a user.

It is of interest to propose techniques that permit enhancing the user experience of a color grading device, compared to some prior art color grading solutions.

**3. Summary**

The present principles enable at least some disadvantages to be resolved by proposing a method comprising:

- determining a transfer function between a source color set and a reference color set, said transfer function satisfying at least one color mapping constraint between at least one element of said source color set and at least one element of said reference color set;
- interpolating said transfer function to at least one unconstrained element of said source color set, said interpolating taking account of a color proximity inside said source color set;
- extrapolating said interpolated transfer function to at least one color element not belonging to said source color set.

By "at least one element" ii is to be understand in the present disclosure, one, several or all elements depending upon embodiments

The method can be performed for instance in an electronic device.

According to an embodiment of the present disclosure, said interpolating uses a first algorithm different to a second algorithm used by said extrapolating.

According to an embodiment of the present disclosure, said transfer function is obtained by an optimal transport algorithm.

According to an embodiment of the present disclosure, said interpolating and/or said extrapolating uses local linear embeddings (LLE) on at least one (one, several or all) elements of said source color set.

According to an embodiment of the present disclosure, said source color set is representative of at least one color used in at least one source frame of at least one source visual content.

It is to be understood that a visual content may include visual items, like images, pictures, photos, drawings, frames or groups of pixels from a video, movie or a collection of stills. A visual content may also include other data, for instance audio and/or metadata.

According to an embodiment of the present disclosure, said method comprises grading an input frame of an input visual content by applying said extrapolated transfer function to said input frame.

According to an embodiment of the present disclosure, said reference color set is representative of at least one color used in at least one reference frame of at least one reference visual content.

Depending upon embodiments of the present disclosure, said source frame, said input frame and/or said reference frame can be part of a same visual content or of different visual contents.

According to an embodiment of the present disclosure, said source visual content, said input visual content and/or said reference visual content is a video sequence.

According to an embodiment of the present disclosure, said source frame, said input frame and/or said reference frame is a still image.

According to another aspect, the present disclosure relates to an electronic device comprising at least one processor.

According to an embodiment of the present disclosure, said at least one processor is configured for:

- determining a transfer function between a source color set and a reference color set, said transfer function satisfying at least one color mapping constraint between at least one element of said source color set and at least one element of said reference color set;

    - interpolating said transfer function to at least one unconstrained element of said source color set, said interpolating taking account of a color proximity inside said source color set;
    - extrapolating said interpolated transfer function to at least one color element not belonging to said source color set.

According to an embodiment of the present disclosure, said interpolating is performed on all unconstrained element(s) of said source color set and wherein said extrapolating is performed for all color element(s) of a color space that do not belong to said source color set.

According to an embodiment of the present disclosure, said processor is adapted for obtaining said constraint from on a user interface of said device.

According to an embodiment of the present disclosure, said processor is adapted for rendering said source color set and/or reference color set on said user interface of said device and by obtaining said constraint by obtaining an association between at least one rendered element of said source color set with at least one rendered element of said source color set from said user interface.

According to an embodiment of the present disclosure, said source color set is representative of at least one color used in at least one source frame of at least one source visual content.

According to an embodiment of the present disclosure, said processor is adapted for grading an input frame of an input visual content by applying said extrapolated transfer function to said input frame.

According to an embodiment of the present disclosure, said input frame is different from said source frame.

According to an embodiment of the present disclosure, said reference color set is representative of at least one color used in at least one reference frame of at least one reference visual content.

According to an embodiment of the present disclosure, said processor is adapted for rendering said source frame, said input frame and /or said reference frame on said user interface.

While not explicitly described, the electronic device of the present disclosure can be adapted to perform the method of the present disclosure in any of its embodiments.

According to another aspect, the present disclosure relates to an electronic device comprising at least one memory and at least one processing circuitry.

According to an embodiment of the present disclosure, said at least one processing circuitry is adapted for:

- determining a transfer function between a source color set and a reference color set, said transfer function satisfying at least one color mapping constraint between at least one element of said source color set and at least one element of said reference color set;
- interpolating said transfer function to at least one unconstrained element of said source color set, said interpolating taking account of a color proximity inside said source color set;
- extrapolating said interpolated transfer function to at least one color element not belonging to said source color set.

According to an embodiment of the present disclosure, said processing circuitry is adapted for obtaining said constraint from on a user interface of said device.

According to an embodiment of the present disclosure, said processing circuitry is adapted for rendering said source color set and reference color set on said user interface of said device and by obtaining said constraint by obtaining an association between at least one rendered element of said source color set with at least one rendered element of said source color set from said user interface.

According to an embodiment of the present disclosure, said source color set is representative of at least one color used in at least one source frame of at least one source visual content.

According to an embodiment of the present disclosure, said processing circuitry is adapted for grading an input frame of an input visual content by applying said extrapolated transfer function to said input frame, said input frame being different from said source frame.

According to an embodiment of the present disclosure, said processing circuitry is adapted for grading an input frame of an input visual content by applying said extrapolated transfer function to said input frame, said input frame being different from said source frame.

According to an embodiment of the present disclosure, said reference color set is representative of at least one color used in at least one reference frame of at least one reference visual content.

According to an embodiment of the present disclosure, said processing circuitry is adapted for rendering said source frame, said input frame and /or said reference frame on said user interface.

While not explicitly described, the electronic device of the present disclosure can be adapted to perform the method of the present disclosure in any of its embodiments.

According to another aspect, the present disclosure relates to a communication system comprising an electronic device of the present disclosure in any of its embodiments. The communication system can notably comprise another electronic device adapted to be coupled to said electronic device. The another device can be for instance a display, an acquiring device or a communication device coupled to the electronic device.

Herein, the term 'coupled' is defined to mean directly connected to or indirectly connected with through one or more intermediate components. Such intermediate components may include both hardware and software based components.

According to another aspect, the present disclosure relates to a non-transitory program storage product, readable by a computer.

According to an embodiment of the present disclosure, said non-transitory computer readable program product tangibly embodies a program of instructions executable by a computer to perform the method of the present disclosure in at least some of its embodiments, notably in any of its embodiments.

According to an embodiment of the present disclosure, said non-transitory computer readable program product tangibly embodies a program of instructions executable by a computer for performing, when said non-transitory software program is executed by a computer, a method comprising:

- determining a transfer function between a source color set and a reference color set, said transfer function satisfying at least one color mapping constraint between at least one element of said source color set and at least one element of said reference color set;
- interpolating said transfer function to at least one unconstrained element of said source color set, said interpolating taking account of a color proximity inside said source color set;
- extrapolating said interpolated transfer function to at least one color element not belonging to said source color set.

According to another aspect, the present disclosure relates to a computer readable storage medium carrying a software program comprising program code instructions for performing the method of the present disclosure, in at least some of its embodiments, for instance in any of its embodiments, when said non-transitory software program is executed by a computer.

According to an embodiment of the present disclosure, said computer readable storage medium tangibly embodies a program of instructions executable by a computer for performing, when said non-transitory software program is executed by a computer, a method comprising:

- determining a transfer function between a source color set and a reference color set, said transfer function satisfying at least one color mapping constraint between at least one element of said source color set and at least one element of said reference color set;
- interpolating said transfer function to at least one unconstrained element of said source color set, said interpolating taking account of a color proximity inside said source color set;
- extrapolating said interpolated transfer function to at least one color element not belonging to said source color set.

**4. List of drawings.**

The present disclosure can be better understood, and other specific features and advantages can emerge upon reading the following description, the description making reference to the annexed drawings wherein:

-   Figure 1 illustrates an image resulting from a color transfer applied on an exemplary source image based on a reference image;
-   Figure 2 illustrates an exemplary graphical representation of a color palette associated with an image;
-   Figure 3 illustrates an exemplary electronic device according to at least one embodiment of the present disclosure;
-   Figures 4A, 4B and 4C illustrate an exemplary embodiment of the method of present disclosure;
-   Figure 5 illustrates an exemplary color mapping constraint between color bins of two color palettes.

It is to be noted that the drawings have only an illustration purpose and that the embodiments of the present disclosure are not limited to the illustrated embodiments.

**5. Detailed description of the embodiments.**

At least some principles of the present disclosure relate to determining a transfer function adapted to be used for color grading of at least one source image in a reusable and consistent way, in order for instance to be adapted to a color grading of several images, (called hereinafter "input images") of at least one input visual content in a consistent and efficient (time-saving) way.

The source image(s) (used for determining the transfer function) can be part of the images (called "input" images) that are to be graded or can used for determining the transfer function without being graded itself.

Notably, at least some embodiments of the present disclosure can allow a user to interactively and intuitively create a color map that can give a desired color look to any image or video sequence.

A color transformation, like a color transfer, can be performed by using a Color Look Up Table (LUT). A color LUT is a color mapping representation, or view, that describes how a set of colors, is transformed (or in other words mapped). When a user wants to give a color look to an image, he can apply a corresponding color LUT on this image so that all the color pixels in this image are mapped to new values as defined in the LUT.

At least one embodiment of the present disclosure aims to help creating a color lookup table (LUT) that transforms all colors of a color space. For instance, the color space can be a Red Blue Green (RBG) color space, or a color space relating to Luminance and to Chrominance components A and B (also known as CIE L*A*B or CIELAB color space) of the French commission "Commission Internationale de l'Eclairage" (CIE).

Each possible color of a pixel of an image can be represented for instance by a position (or bin) in a color space (like the "Red Green Blue" (RGB) color space). The set of colors of the color space is hereinafter denoted as $\mathbf{c^{orig}} \in R^{K_o \times 3}$, each row of $\mathbf{c^{orig}}$ representing a color. A way of obtaining $\mathbf{c^{orig}}$ is by sampling regularly the RGB color space for instance. Depending on the embodiments, the size $N^3$ of the set of colors $\mathbf{c^{orig}}$ can vary. For instance, N can be chosen in the range [1; 514], [2; 256] or [5; 64] (like 17 or 32).

With the above notation, a LUT (or mapping) can be represented by a function:

$f: R^{1\times 3} \to R^{1\times 3}$, where $f\left(\mathbf{c}_i^{\mathbf{orig}}\right)$ is the new color for the $i^{th}$ row of $\mathbf{c^{orig}}$ after grading.

For simplicity, we will write $f\left(\mathbf{c}_i^{\mathbf{orig}}\right) = \mathbf{c}_i^*$ hereafter.

The creation of a LUT can be performed automatically, without any indication of a user. However, when the assessment of mapping color pairs is performed automatically, it does not take into account a feeling of a user, like an artistic criterion. Thus, the "graded" image (resulting from the applying of the LUT to the input image) can be different of what is expected by a user.

At the opposite, when a LUT encodes a color transformation based on user-defined mapping, the LUT can contain strong discontinuities, that will induce strong artefacts in the graded image. Such discontinuity can appear notably if two close colors of the input image are mapped onto two far colors of the reference image. indeed, in order to have a stable grading procedure, the LUT should encode a smooth mapping, i.e., two colors that are similar before grading should stay similar after grading.

One cannot even guaranty the ability to create a LUT based on a user defined mapping. For instance, some user-defined mapping can lead to a LUT with holes and thus to an impossible mapping.

So, there is a need for a solution that helps generating color transformations leading to a LUT smoother and with less artefact than some solutions of the prior art while taking into account, at least partially, the willingness of the user.

Furthermore, an exemplar source image used during the user mapping does not span the whole set of displayable colors (gamut). A technique to extrapolate the effect of the grading on unseen colors (i.e. color not present in the source image but that might appear an input image, different from the source image, to grade with the LUT) is also necessary to be able to grade a future content with the same LUT.

At least some embodiments of the present disclosure help addressing these two issues. More precisely, at least some embodiments of the present disclosure permit to take into account some imposed constraints on the grading of certain colors of one or several source image(s) and to propagate automatically and consistently those constraints to all pixels of the considered source image(s). Those constraints can notably be obtained at least partially from a user interface.

The one or several source and/or the one or several input image(s) can belong to a same visual content (for instance a video sequence) or to different visual contents. For instance, the source images can belong to at least one video sequence corresponding to at least one episode of a TV series, or to different still images having an intended "common" artistic feeling (like still pictures of a same photographer to be included in a single photographic book for instance). The one or several input image(s) can belong to the same visual content(s) as at least one of the source image or to other visual contents. They are to be graded similarly to the source images. For instance, with the examples above, an input image can belong to a video sequence corresponding to another episode of the same TV series than the source image(s), or to different still images that are included in the same photographic book.

The present disclosure relies, at least partially, on color palettes for determining the color constraints to be imposed to the source image(s).

A color palette is a set of colors, or color set, being a subset of a set of all possible colors.

Figure 2 illustrates an image 200 and a graphical view of a color palette 210 representative of the color distribution in this image. The elements (or bins) of the color palette (or color set) are colors, each represented 212 by a colored square.

Even if a color palette (constituted of a plurality of color bins) can be illustrated by a graphical representation (like a set of colored squares as illustrated in figure 2), it is to be pointed out that in the present patent application the terms "color bin" and "color palette" are not to be limited to graphical representations.

Indeed, the term "color bin" is herein to be understood as a point, or element, of a color space. Similarly, the term "color palette" is herein to be understood as a set of points of a color space. Points of a color palette are also called hereinafter "palette element". Similarly, the term "palette" refers hereinafter to a color palette.

According to at least some embodiments of the present disclosure, the grading can be performed by using a reference color palette in order to give, to one or several input images, or frames, the look, or appearance, desired by a user, e.g., a professional user, like colorist, or domestic user, like a user of an image processing device.

In at least some embodiments, the reference color palette can be for instance chosen, as being representative of a targeted ambiance, or style (like "romantic", "frightening", ....).

Depending upon embodiments, a reference palette can be constructed without referring to a particular visual content, or it can be representative of at least one frame of at least one visual content, used as a reference, or example. The visual content of a frame to which the reference palette is representative can be the same or a different visual content than a visual content to which an input frame belongs to (or from which an input frame has been extracted).

A frame that is to be graded is called hereinafter "input frame" or "input image". Accordingly, a visual content containing at least an input frame (or image) is called hereinafter "input" visual content

Similarly, a frame that is to be used for constructing a reference palette is called hereinafter "reference frame" or "reference image", and a visual content containing at least a reference frame is called hereinafter "reference visual content".

A frame that is to be used for constructing a source palette (as it will be explained later) for defining a color transformation is called hereinafter "source frame" or "source image". Accordingly, a visual content containing at least a source frame (or image) is called hereinafter "source" visual content. Of course, an input frame (respectively the corresponding input visual content) can also be used as a source frame (respectively the corresponding source visual content).

Depending upon embodiments, a source frame, an input frame and a reference frame can be comprised in a same visual content or in different visual contents.

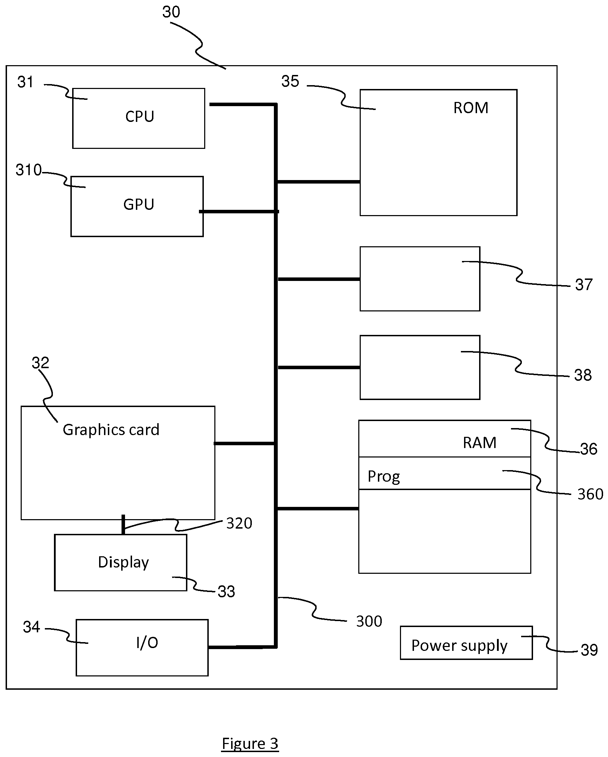

Figure 3 describes the structure of an exemplary electronic device 30 configured notably to perform any of the embodiments of the method of the present disclosure.

It is to be pointed out that the elements, or modules, or blocks, of the functional structure illustrated in figure 3 can be implemented using software components stored in memory and executed by a processor or CPU of the electronic device and/or using hardware components of the electronic device. At least some elements illustrated by figure 3 can comprise both at least one software component and at least one hardware component of the electronic device.

The electronic device can be any image and/or video content acquiring device, like a smart phone or a camera. It can also be a device without any video acquiring capabilities but with image and/or video processing capabilities. For instance, in some embodiment, the electronic device can comprise a communication interface, like a receiving interface to receive a visual content (for instance a still image and/or a video sequence), like a reference video content or an input video content to be processed according to the method of the present disclosure. This communication interface is optional. Indeed, in some embodiments, the electronic device can process visual contents, like input and/or reference contents stored in a medium readable by the electronic device.

In the exemplary embodiment of figure 3, the electronic device 30 can include different devices, linked together via a data and address bus 300, which can also carry a timer signal. For instance, it can include a micro-processor 31, 310 (or CPU), notably a Graphic Processing Unit (GPU) 310 (Optional), a graphics card 32 (depending on embodiments, such a card may be optional), at least one Input/ Output module 34, (like a keyboard, a mouse, a led, and so on), a ROM (or "Read Only Memory") 35, a RAM (or "Random Access Memory") 36.

In the exemplary embodiment of figure 3, the electronic device can also comprise at least one communication interface 37 configured for the reception and/or transmission of data, notably image and/or video data, via a wireless coupling (notably of type WIFI® or Bluetooth®), at least one wired communication interface 38, a power supply 39. Those communication interfaces are optional.

In some embodiments, the electronic device 30 can also include, or be coupled to, at least one display module 33, for instance a screen, directly coupled to the graphics card 32 by a dedicated bus 320. Such a display module can be used for instance in order to output (either graphically, or textually) information, as described hereinafter in link with at least one of the rendering steps of the method of the present disclosure.

It is to be noted that in some embodiments, the electronic device can include several display modules. For instance, a first display module of the electronic device can be used for rendering a source image or an input image, a second display module of the electronic device can be used for rendering a reference image to be used as an exemplar for the determining of a transfer function on the source image and a third display module of the electronic device can be used for rendering an output image being a graded image resulting from the color grading of an input image (or of a source image). When several source and/or reference images can be used for determining a color transfer, several source and/or reference images can be rendered simultaneously, on a common display (for instance in several windows of a same display) or on different displays of the electronic devices.

In the illustrated embodiment, the electronic device 30 can communicate with another device (like a server or camera) or with one of the display thanks to a wireless interface 37.

Each of the mentioned memories can include at least one register, that is to say a memory zone of low capacity (a few binary data) or high capacity (with a capability of storage of an entire audio and/or video file notably).

When the electronic device 30 is powered on, the microprocessor 31 loads the program instructions 360 in a register of the RAM 36, notably the program instruction needed for performing at least one embodiment of the method described herein, and executes the program instructions.

According to a variant, the electronic device 30 includes several microprocessors.

According to another variant, the power supply 39 is external to the electronic device 30.

In the exemplary embodiment illustrated in figure 3, the microprocessor 31 can be configured for:

- determining a transfer function between a source color set and a reference color set, said transfer function satisfying at least one color mapping constraint between at least one element of said source color set and at least one element of said reference color set;
- interpolating said transfer function to at least one unconstrained element of said source color set, said interpolating taking account of a color proximity inside said source color set;
- extrapolating said interpolated transfer function to at least one color element not belonging to said source color set.

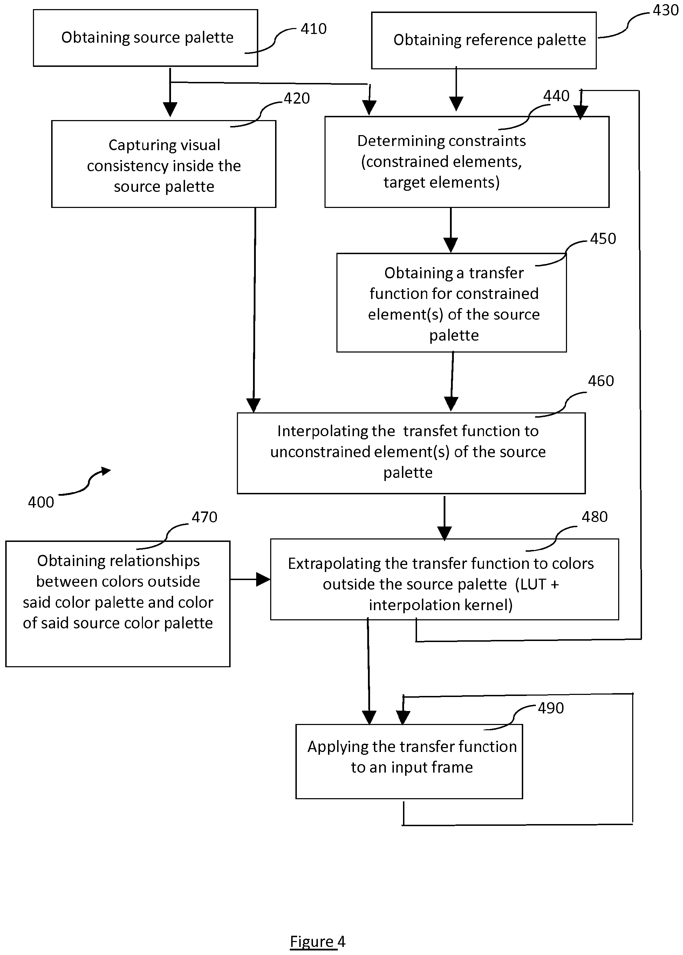

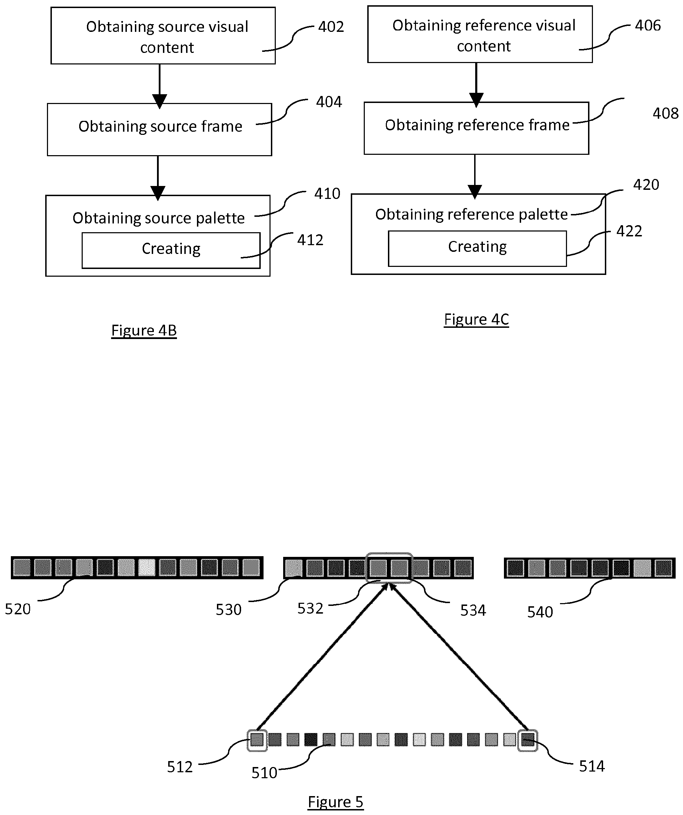

Figure 4 illustrates a flowchart of an exemplary method 400 implementing some principles of the present disclosure. The method can be implemented for instance in the electronic device 30 of figure 3.

With the notation used above, at least some embodiments of the method of the present disclosure notably aim to determine the values $c_i^*$, mapping the set of colors $\mathbf{c}^{orig}$ of the color space, that respect determined constraints, including for instance constraints given by a user, while ensuring that the mapping is smooth for all colors of the color space.

Constraints can be determined by using at least one source image, to be used as a base image for the color transfer and one or several exemplar images that have the color look that the user desires. The source image can notably be an "input" image of at least one content the user wishes to grade.

Constraints are defined on elements of a source color palette, representative of the color distribution of the source image. In at least some embodiments, the method of the present disclosure comprises interpolating a transfer function, based on the determined constraints to the whole source color palette, by taking into account the structure of the source palette, and then extrapolating the interpolating result on the whole color space.

In some embodiments, notably when the source palette is derived from source image displayed to a user, the interpolating and the extrapolating steps can be performed differently. Indeed, the interpolating is applied to elements of the source palette, and thus concerns color of on a source image displayed to a user. Notably, when the graded source image will also be displayed to the user, it can be possible for the user to evaluate the result of the interpolating and thus to modify the result if needed (by adding and /or removing constraints for instance). At the opposite, the extrapolating is applied to elements of the color space that are not present in the source color palette and thus are not displayed by the source images used for defining the grading. Thus, it is not possible for a user to check, when grading the source image, the result of the extrapolating. Thus, it is important than the extrapolating does not introduce an unexpected, surprising, mapping for some elements of the color space being outside the source color palette.

In the illustrated embodiment, the method 400 comprises obtaining 410 of at least one source palette. For instance, the source palette can be representative of a color distribution of a frame of a source visual content, like a video content.

In the illustrated embodiment, the method 400 also comprises obtaining 430 of at least one reference palette, to be used as an exemplar, or reference, for determining a transfer function applicable to at least a part of the source palette. The reference palette can be representative of a color distribution of a frame of at least one reference visual content, as in the exemplary embodiment illustrated by figure 4C, or it can have been chosen (by a color artist for instance) for reflecting a particular ambiance. The reference palette can notably gather the color distribution of several frames of a same reference visual content, or of several frames of several reference visual contents.

Depending upon embodiments, the source and/or reference palette may have been previously computed, either locally (for instance by some image and/or video acquiring means, like a camera or a web cam, of the electronic device illustrated by figure 3), or remotely. Thus, in some embodiments, the obtaining 410 of the source palette and/or the obtaining 420 of the at least one reference palette can comprise reading of local storage medium, like a memory of the electronic device 30 in which the method is implemented or a removable storage unit (like a USB key, a compact disk, and so on). In other embodiments, the source and/or reference palette can be obtained via a communication interface of the electronic device 30 from a remote device.

Figures 4B and 4C illustrates exemplary embodiments where the source and reference palettes are obtained, at least partially, from visual contents. For instance, they can be obtained from visual contents stored on a local storage medium, like a memory, of the electronic device 30 in which the method is implemented or a removable storage unit (like a USB key, a compact disk, and so on) mounted with the electronic device. Notably, at least one of the source and reference visual content can have been acquired by some image and/or video acquiring means, like a camera or a web cam, of the electronic device illustrated by figure 3, or received from a communication interface of the electronic device illustrated by figure 3.

In some embodiments, as illustrated by figures 4B and 4C, the method can comprise obtaining 402 the at least one input visual content and/or obtaining 406 of the at least one reference visual content and obtaining (404, 408) a particular source frame and at least one reference frame, from those contents, by interacting with a user for instance. The source and/or reference palette can then be obtained, at least partially, from those obtained source and/or reference frames.

In some embodiments, when the constraints are defined from several source frames and/or several reference frames, the obtaining of a source visual content and/or a source and/or the obtaining of a reference visual content and/or a reference frame can be performed iteratively.

In the embodiments of figure 4B and 4C, obtaining 410 a color palette of the source frame and/or obtaining 430 a color palette of the reference frame can also involve creating 412, 422 a color palette for the source frame and the reference frame respectively.

Depending upon embodiments, several techniques can be used to create a color palette. A color palette can notably be computed in the L*a*b domain. It can also be computed in other color domains such as the domain known as "YCrCb" for instance.

For instance, in some embodiments, a K-means technique can be used. Such a technique can permit to find K clusters, in a color space, for an image (with K being a given integer, strictly greater than zero). The K centroids represent the K more relevant points, or color bins, for the image. All the color bins corresponding to the K centroids represent the color palette of the image (thus a color bin represents at least one color of the image). In some embodiment, for instance, a k-means technique with a predefined number $k > 0$ of clusters can be used. In other embodiments, other techniques, for instance a technique that finds automatically the number K, for instance an Automatic Color Palette (ACoPa) technique can be used.

In the exemplary embodiment described, let $x \in R^{n \times 3}$ be a vector containing the color pixels in the reference image.

A reference color palette $q \in R^{k \times 3}$ of size k representative of the color distribution in $x$ can be obtained by clustering the row-vectors in $x$ into k clusters. Such a clustering can use a k-means technique for instance.

When L reference frames are used for determining a transfer function, applying the clustering procedure detailed above to the L reference frames (or exemplary frames) yields to L palettes $q^1 \in R^{k_1 \times 3}, ..., q^L \in R^{k_L \times 3}$, where the number of clusters $k_1, ..., k_L \geq 0$ can be chosen differently for each frame. To simplify notations hereafter, these palettes can be concatenated in a global reference palette denoted by:

$$q = \begin{pmatrix} q^1 \\ \vdots \\ q^L \end{pmatrix} \in \mathbb{R}^{K_e \times 3},$$

where $K_e = \sum_{i=1}^{L} k_i$.

In some embodiments, like in the exemplary embodiment described, all the bins of all the L color palettes are present in the global reference palette (a given color bin can thus be present several times in the global reference palette).

In other embodiments, the L color palettes of the different reference images can be merged together in the global palette, in order for the global palette to contain only distinct color bins.

A global source palette $\mathbf{p} \in R^{K_s \times 3}$, with $K_s \geq 0$, can be obtained from one or several source image(s) using a similar clustering procedure.

In a purpose of simplicity, term "global" will be omitted hereinafter for qualifying a color palette, even if it representative of several images.

It is to be noted that the source palette and the reference palette can have a different number of color bins, or a same number of color bins, depending upon embodiments.

Figure 5 represents an example of a source palette 510 and of several reference palettes 520, 530 and 540.

In some embodiments, creating 404 a color palette for a source frame and/or creating 408 a color palette for a reference frame can be optional. Indeed, such a color palette can also have been previously created and can be obtained by reading a storage medium and/or from a communication interface of the electronic device. In such a case, the color palette can notably be stored in association with the corresponding frame (for instance as metadata).

It is to be noted that, depending upon embodiments, obtaining at least one source visual content, at least one source frame and/or the associated color palette and obtaining at least one reference visual content, at least one reference frame and the associated color palette can be performed in parallel or sequentially in variable orders.

In the detailed embodiment, the method can comprise determining 440 at least one color mapping constraint between at least one element of the source color palette and at least one element (called herein after "target element") of the reference color palette.

Figure 5 represents an example of a color mapping constraint between some source elements (or bins) 512, 514 of the source palette 510 and some target element (or bins) 532, 534 of the reference palette 530.

We denote hereinafter by $j_1, ..., j_m$ the indices of the palette elements of the source palette $\mathbf{p}$ that are involved in a constraint. The "constrained" palette elements are thus $\mathbf{p}_{j_1}, ..., \mathbf{p}_{j_m} \in R^3$, where $\mathbf{p}_j$ denotes the $j^{th}$ row-vector (or the three dimensions of the color bin $p_j$) of $\mathbf{p}$.

Similarly, we denote by $i_1, ..., i_l$ (with $l$ inferior or equal to $Ke$) the indices of the "target" palette elements in the reference palette $\mathbf{q}$ that are involved in a constraint. The "target" palette elements (or bins) are thus $\mathbf{q}_{i_1}, ..., \mathbf{q}_{i_l} \in R^3$.

In the illustrated embodiment, the method comprise obtaining 450 a transfer function for the constrained elements of the source palette.

Depending upon embodiments, different solutions can be used to impose a mapping between involved elements (called hereinafter "constrained" elements) of the source palette and target elements of the reference palette. For example, according to some embodiments, the mapping can be imposed only between the mean color of the constrained elements and the mean color of the target elements:

$$\frac{1}{m} \sum_{u=1}^{m} \mathbf{p}_{j_u}^* = \frac{1}{l} \sum_{u=1}^{l} \mathbf{q}_{i_u}$$

Another solution for obtaining the transfer function for the constrained elements is to find a mapping by optimal transport between the subpalettes $\mathbf{p}_{j_1}, ..., \mathbf{p}_{j_m}$ and $\mathbf{q}_{i_1}, ..., \mathbf{q}_{i_l}$

The result of the mapping produces elements $\mathbf{p}_{j_1}^*, ..., \mathbf{p}_{j_m}^*$, which are the value of the constrained elements $\mathbf{p}_{j_1}, ..., \mathbf{p}_{j_m}$, respectively, after grading. In both cases, the constraints can be written compactly in the form:

$$Mp^* = y \qquad (1),$$

Where:

- $p^*$ is the final palette we seek to determine,
- $y$ is a matrix of size $c \times 3$ that contains the value of each constraint (there are c constraints), and
- $M$ is a matrix of size $c \times Ks$.

In the case where the mean colors are constrained, $y$ contains the mean value $\frac{1}{l}\sum_{u=1}^{l} q_{i_u}$ and M reduces to a row-vector with entries satisfying $M_{1j_u} = 1/m$ for $u = 1, ..., m$, and null entries otherwise. In the case where a partial mapping is obtained by optimal transport, $y$ contains the values $p^*_{j_1}, ..., p^*_{j_m}$ computed by optimal transport and M is a $m \times K$ matrix satisfying $M_{uj_u} = 1$ for $u = 1, ..., m$, and null entries otherwise.

Beyond these two exemplary cases, the method generalizes directly to any type of constraints that can be written in the form of the above equation "(1)".

In some embodiments, at least some of the constraints can have been defined previously, for instance because a previous color grading has already been performed, at least partially, on the source frame. It can be the case, notably, in some embodiments of the present disclosure, where a generation or determination of some constraints can be performed by several users. For instance, a photography director can define some constraints at a global level (for instance for all frames of a source movie), some other constraints being built (for instance at a later stage) by some colorists in charge of some scene (or shot) of the same movie. In such an embodiment, at least some of the constraints can be obtained for instance by accessing a file, for instance a descriptive file. Notably, such a descriptive file can be associated (for instance as metadata) to a previous grading.

Once the transfer function to be used for grading the constrained elements of the source palette $p$ has been obtained, the method further comprises interpolating 460 the transfer function on the entire source palette p, to obtain a final palette $p^*$ corresponding to the mapping of the entire source color palette $p$.

The interpolating can be optional. Notably, in some embodiments, it can happen that the determined constraints fully define the entries of $p^*$.

When the determined constraints only define some of the entries of $p^*$ (leading to a source palette $p$ comprising unconstrained elements), the interpolating aims to compute all the values of $p^*$ while ensuring that the above constraints are satisfied for the constrained elements (thus keeping unchanged the corresponding target elements of $p^*$) and that the mapping is smooth. The interpolating can notably use techniques adapted from techniques used for user-edit propagation on images, like technics described by X. Chen and al in publication "Manifold preserving edit propagation," (ACM SIGGRAPH Asia, vol. 31, no. 6, 2012), to compute the final palette $p$.

As already explained, in at least some embodiments (notably in embodiments comprising a rendering on a user interface of the image corresponding to the grading of the source image whose color distribution the source color palette is representative of), the interpolating tries to preserve as well as possible the geometry of the source palette $p$ to compute its mapped palette $p^*$ (in terms on proximities between elements of a color palette inside a color space for instance, like regarding an Euclidian distance between elements of the color palette inside the color space). The underlying idea is to map similar colors in $p$ to similar color in $p^*$.

As explained above, each element of the source palette can be considered as a point of a color space, and the source palette itself can be considered as a distribution of points in this color space.

In at least some embodiments, one of the purposes of the interpolating is to obtain a mapping function $f$ that modifies the source palette according to constraints defined by a user. Those constraints can be seen as examples of what the user wants to obtain. In some embodiments, like in the illustrated embodiments, the interpolating can be performed by maintaining a visual consistency inside the palette $p^*$, (compared to the source palette) while not constraining the variation of others parameters related the palettes $p$ and $p^*$ (like mapping of unconstrained elements of the source palette, mean values, variances, ..) in the mapping.

According to the exemplary embodiment, the visual consistency is assessed via the local neighborhoods inside the palette. The interpolating can notably comprise capturing 420 the visual consistency of the source palette. This can be performed for instance using LLE (Local Linear Embeddings).

For each entry $p_l$ of $p$, we search in the source color palette $p$ the k nearest neighbors to $p_l$ (excluding $p_l$ itself from the search).

Let $l_1, ..., l_k$, be the indices of these k nearest neighbors in $p$. We first compute a matrix W of size $K_s \times K_s$ that minimizes

$$\min_{W} \sum_{l=1}^{K_s} \left( \boldsymbol{p}_l - \sum_{u=1}^{k} W_{ll_u} \boldsymbol{p}_{l_u} \right)^2 \quad subject\ to \quad \sum_{u=1}^{k} W_{ll_u} = 1, \quad l = 1, \dots, K_s.$$

The matrix W thus gives information about the local structures inside the source color palette.

According to the exemplary embodiment, the visual consistency is assumed to be kept when local neighborhood is preserved by the mapping. Indeed, a mapping not preserving local neighborhood will lead to artefacts in a graded image.

The interpolating can thus also comprise applying, on the constrained points (or colors) the corresponding constraints, which can be seen as movements (of each constrained point to its mapped point) inside the color space, while preserving (or in other words keeping unchanged or at least minimizing changes, as the most as possible) the visual consistency between the source palette and the resulting palette $\boldsymbol{p}^*$.

Thus, the color palette $\boldsymbol{p}^*$ can for instance be computed by solving:

$$\boldsymbol{p}^* = \operatorname*{argmin}_{z} \sum_{l=1}^{Ks} \left( \boldsymbol{z}_l - \sum_{u=1}^{k} W_{ll_u} \boldsymbol{z}_{l_u} \right)^2 \quad subject\ to \quad Mz = y.$$

The constraints Mz = y force the final palette $\boldsymbol{p}^*$ to satisfy exactly the constraints imposed above by the user, while the second term $\sum_{l=1}^{Ks} \left( \boldsymbol{z}_l - \sum_{u=1}^{k} W_{ll_u} \boldsymbol{z}_{l_u} \right)^2$ forces $\boldsymbol{p}^*$ to have locally a geometry similar to the geometry of the source palette, regarding the "unconstrained" elements (elements of the source palette for which no constraint is determined). According to the exemplary embodiment, the interpolating 460 finally results in a mapping f, with $f(\boldsymbol{p}_i) = \boldsymbol{p}_i^*$ that defines how each element $\boldsymbol{p}_i$ of the source palette $\boldsymbol{p}$ is to be mapped to another element $\boldsymbol{p}_i^*$ of the color space.

Is it to be noted that the color palette $\boldsymbol{p}^*$ which result from the interpolating can be visually very different of the source palette (as the global means and variances can have been broken). The approach of at least some embodiments of the present disclosure is thus very different to some approachs of the prior art, that aim to obtain, by the mapping, a resulting palette being as close as possible to the source palette.

According to the illustrated embodiment, the method 400 comprises extrapolating 480 the transfer function $f$, obtained by the interpolating, to elements of the color space not comprised in the source color palette. The interpolating and the extrapolating can notably be performed sequentially. More precisely, according to at least some embodiments of the present disclosure, once the interpolating has been performed, the output of the interpolating can be used as an input for the extrapolating, as it will be described hereinafter.

In some embodiments, the set of colors in of the color space $c^{orig}$ and the elements of source palette $\boldsymbol{p}$ can refer to different color domains (for instance Lab or RGB). Thus, in such a case, before or during the extrapolating, the method can comprise converting $c^{orig}$ and $\boldsymbol{p}$ to the same color domain, e.g., Lab or RGB. Of course, this step is optional when $c^{orig}$ and $\boldsymbol{p}$ belongs to the same color domain, e.g., Lab or RGB.

In the exemplary embodiment described, the extrapolating comprises determining the function $f$ which defines, for a color $c_i^{orig}$ of the color space, which is not included in the source color palette, the value $c_i^*$ with: $f\left(c_i^{orig}\right) = c_i^*$.

It can notably be performed for all colors $c_i^{orig}$ of the color space, not included in the source color palette.

In the illustrated embodiment, the method can also comprise obtaining 470 a relation (or in other word an association) between at least one color element located outside the source palette and some elements of the source palette. For instance, the method can comprise computing a matrix W' of size $K_o \times K_s$ that minimizes

$$\min_{W'} \sum_{i=1}^{K_0} \left( c_i^{orig} - \sum_{u=1}^{k} W'_{li_u} \boldsymbol{p}_{i_u} \right)^2 \quad subject\ to \quad \sum_{u=1}^{k} W'_{li_u} = 1, \quad l = 1, \dots, K_o,$$

where $\boldsymbol{p}_{i1}, ..., \boldsymbol{p}_{ik}$ are the k nearest neighbors of the color $\mathbf{c}_i^{\mathbf{orig}}$ in the source color palette $\boldsymbol{p}$.

As a result, a relation is obtained between each element of $\mathbf{c}_i^{\mathbf{orig}}$ and some elements of the source color palette $\boldsymbol{p}$.

Indeed, we have $\mathbf{c}_i^{\mathbf{orig}} \approx \sum_{u=1}^{k} W'_{lj_u} \boldsymbol{p}_{i_u}.$ Therefore, each element $\mathbf{c}_i^{\mathbf{orig}}$ is approximated by a linear combination of source palette elements $\boldsymbol{p}_i$.

The linear combination can notably involve unconstrained elements of the source palette (whose mapping has been obtained during the interpolating).

In the exemplary embodiment described, as the mapping $f(\boldsymbol{p}_i) = \boldsymbol{p}_i^*$ is known for an element $\boldsymbol{p}_i$ of the source color palette $\boldsymbol{p}$, the extrapolating can then comprise computing the new values $\mathbf{c}_i^*$ by making use of the above relation. More precisely, the values $\mathbf{c}_i^*$ can be obtained by computing

$$\mathbf{c}_i^* = \sum_{u=1}^{k} W'_{lj_u} f(\boldsymbol{p}_{i_u}) = \sum_{u=1}^{k} W'_{lj_u} \boldsymbol{p}_{i_u}^*.$$

Of course, the extrapolating can be performed differently depending upon embodiments on the present disclosure. For instance, in another embodiment, the extrapolating on $c^{orig}$ can be performed, similarly to what have been presented in link with interpolating step, by concatenating $c^{orig}$ and the source color palette $\boldsymbol{p}$ in a vector $\tilde{\boldsymbol{p}}$, replacing term $\boldsymbol{p}$ with term $\tilde{\boldsymbol{p}}$ and term $\boldsymbol{p}^*$ by term $\tilde{\boldsymbol{p}}^*$ and dimension $K_s$ by dimension $K_s + K_o$ in the formula disclosed in link with the interpolating and extracting the part of the vector corresponding to $c^*$ in $\tilde{\boldsymbol{p}}^*$.

In a variant, the extrapolating can be performed based on a spline extrapolation method applied based on the mapping function resulting from the interpolating.

The color LUT can then obtained from the extrapolated transfer function. In some embodiments, the LUT can be converted to other formats. In some embodiments, notably, it can be converted to at least one format compatible with existing tools, such as Lustre © or Resolve © tools.

According to the illustrated embodiment, the method can also comprise color grading an input image, by applying the LUT to each of its pixel and rendering the color graded image on a user interface (like a display of the electronic device 30).

As the LUT has been built on a transfer function extrapolated to the whole color space, the same LUT can be applied to several input images, either a source image used for determining the transfer function or another image, whatever their color distribution is. Such an embodiment thus can offer advantages in terms of simplicity and time-saving for a user.

A skilled artisan will appreciate that other functionalities not described in the present disclosure may be added to the method described herein in order to improve the quality of the end product.

The present disclosure has been detailed with a 3D LUT color transforms. Of course, the solution of the present disclosure can also be used in link with a 1 D LUT (for instance a contrast mapping for luminance transfer), or a combination of at least two of above transformations.

Of course, the color grading and the rendering of source or input images can be optional depending upon embodiments. Notably, the mapping on the whole color space, the color grading of at least one input image by using this mapping and the rendering of the graded input image can be performed at different moments.

It is also to be noted that, in some embodiments, at least some steps of the method of the present disclosure can be performed iteratively, as constraints can be added and/or or removed and based on sources and/or different reference frames until the desired look is obtained.

Of course, the exemplary embodiments described herein are only presented as exemplary use cases and the principles of the present disclosure can also apply to many different use cases. For instance, they can apply to constraints defined on one or several source frames (for instance a still image or a frame of a video sequence) according to only one reference frame, or according to several reference frames of a same visual content, or according to several reference frames of different visual contents of a same type (for instance still images or video sequence) or of different types (for instance a mix of still images and video sequences).

It is also to be pointed out that at least some of the embodiments of the present disclosure can be combined with embodiments disclosed in the Patent application EP17305645.8 filed in the name of the applicant.

As can be appreciated by one skilled in the art, aspects of the present principles can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium may be utilized.

A computer readable storage medium can take the form of a computer readable program product embodied in one or more computer readable medium and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage media to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it can be appreciated by those skilled in the art that the block diagrams presented herein represent conceptual views of illustrative system components and/or circuitry of some embodiments of the present principles. Similarly, it can be appreciated that any flow charts, flow diagrams, state transition diagrams, pseudo code, and the like represent various processes which may be substantially represented in computer readable storage media and so executed by a computer or processor, whether such computer or processor is explicitly shown.

**Claims**

1. A method comprising:

    determining a transfer function between a source color set and a reference color set, said transfer function satisfying at least one color mapping constraint between at least one element of said source color set and at least one element of said reference color set;
    interpolating said transfer function to at least one unconstrained element of said source color set, said interpolating taking account of a color proximity inside said source color set; extrapolating said interpolated transfer function to at least one color element not belonging to said source color set.

2. The method of claim 1 wherein said interpolating uses a first algorithm different to a second algorithm used by said extrapolating.

3. The method of claim 1 or 2 wherein said transfer function is obtained by an optimal transport algorithm.

4. The method of any of claims 1 to 3 wherein said interpolating and/or said extrapolating uses local linear embeddings (LLE) on elements of said source color set.

5. An electronic device comprising at least one processor configured for:

    - determining a transfer function between a source color set and a reference color set, said transfer function satisfying at least one color mapping constraint between at least one element of said source color set and at least one element of said reference color set;
    - interpolating said transfer function to at least one unconstrained element of said source color set, said interpolating taking account of a color proximity inside said source color set;
    - extrapolating said interpolated transfer function to at least one color element not belonging to said source color set.

6. The electronic device of claim 5 wherein said processor is adapted for obtaining a first one of said constraint from on a user interface of said device.

**7.** The electronic device of claim 5 or 6 wherein said processor is adapted for rendering said source color set and reference color set on said user interface of said device and by obtaining said constraint by obtaining an association between at least one rendered element of said source color set with at least one rendered element of said source color set from said user interface.

**8.** The electronic device of any of claims 5 to 7 wherein said interpolating is performed on all unconstrained element(s) of said source color set and wherein said extrapolating is performed for all color element(s) of a color space that do not belong to said source color set.

**9.** The electronic device of any of claims 5 to 8 wherein said source color set is representative of at least one color used in at least one source frame of at least one source visual content.

**10.** The electronic device of any of claims 5 to 9 wherein said processor is adapted for grading an input frame of an input visual content by applying said extrapolated transfer function to said input frame.

**11.** The electronic device of claim 10 wherein said input frame is different from said source frame.

**12.** The electronic device of any of claims 5 to 11 wherein said reference color set is representative of at least one color used in at least one reference frame of at least one reference visual content.

**13.** The electronic device of any of claims 9 to 12 wherein said processor is adapted for rendering said source frame, said input frame and /or said reference frame on said user interface.

**14.** A computer program product comprising program code instructions for executing, when said program is executed by a computer, a method comprising:

- determining a transfer function between a source color set and a reference color set, said transfer function satisfying at least one color mapping constraint between at least one element of said source color set and at least one element of said reference color set;
- interpolating said transfer function to at least one unconstrained element of said source color set, said interpolating taking account of a color proximity inside said source color set;
- extrapolating said interpolated transfer function to at least one color element not belonging to said source color set.

**15.** A computer-readable storage medium on which is saved a computer program comprising program code instructions for executing, when said program is executed by a computer, a method comprising:

- determining a transfer function between a source color set and a reference color set, said transfer function satisfying at least one color mapping constraint between at least one element of said source color set and at least one element of said reference color set;
- interpolating said transfer function to at least one unconstrained element of said source color set, said interpolating taking account of a color proximity inside said source color set;
- extrapolating said interpolated transfer function to at least one color element not belonging to said source color set.

110          120          130

Figure 1

200

210

212

Figure 2

Figure 3

| Obtaining source palette — 410 | | Obtaining reference palette — 430 |

| Capturing visual consistency inside the source palette — 420 | | Determining constraints (constrained elements, target elements) — 440 |

Obtaining a transfer function for constrained element(s) of the source palette — 450

Interpolating the transfet function to unconstrained element(s) of the source palette — 460

400

| Obtaining relationships between colors outside said color palette and color of said source color palette — 470 | Extrapolating the transfer function to colors outside the source palette (LUT + interpolation kernel) — 480 |

Applying the transfer function to an input frame — 490

Figure 4

```
┌──────────────────────────┐              ┌──────────────────────────┐
│   Obtaining source visual│ ⌐ 402        │  Obtaining reference visual│ ⌐ 406
│          content         │              │          content         │
└──────────────────────────┘              └──────────────────────────┘
            │                                          │
            ▼                                          ▼
┌──────────────────────────┐ ⌐ 404        ┌──────────────────────────┐ ⌐ 408
│  Obtaining source frame  │              │ Obtaining reference frame│
└──────────────────────────┘              └──────────────────────────┘
            │                                          │
            ▼                                          ▼
┌──────────────────────────┐ ⌐ 410        ┌──────────────────────────┐ ⌐ 420
│ Obtaining source palette │              │Obtaining reference palette│
│  ┌────────────────────┐  │ ⌐ 412        │  ┌────────────────────┐  │ ⌐ 422
│  │      Creating      │  │              │  │      Creating      │  │
│  └────────────────────┘  │              │  └────────────────────┘  │
└──────────────────────────┘              └──────────────────────────┘
```

Figure 4B

Figure 4C

Figure 5

Europäisches
Patentamt

European
Patent Office

Office européen
des brevets

# EUROPEAN SEARCH REPORT

**Application Number**

EP 17 30 6161

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Oriel Frigo ET AL: "Optimal Transportation for Example-Guided Color Transfer", Computer Vision -- ACCV 2014, 1 January 2015 (2015-01-01), pages 655-670, XP055452107, Cham ISBN: 978-3-319-16811-1 Retrieved from the Internet: URL:https://link.springer.com/content/pdf/10.1007/978-3-319-16811-1_43.pdf [retrieved on 2018-02-16] * Sections 3.2, 3.3. * ----- | 1-15 | INV. H04N1/60 |
| X,D | XIAOWU CHEN ET AL: "Manifold preserving edit propagation", ACM TRANSACTIONS ON GRAPHICS (TOG), vol. 31, no. 6, 1 November 2012 (2012-11-01), page 1, XP055417855, US ISSN: 0730-0301, DOI: 10.1145/2366145.2366151 * Sections 3, 4.2. * ----- | 1,5,14, 15 | |
| A | SIRA FERRADANS ET AL: "Regularized Discrete Optimal Transport", 2 June 2013 (2013-06-02), SCALE SPACE AND VARIATIONAL METHODS IN COMPUTER VISION, SPRINGER BERLIN HEIDELBERG, BERLIN, HEIDELBERG, PAGE(S) 428 - 439, XP047028993, ISBN: 978-3-642-38266-6 * Section 5, page 437. * ----- | 1-15 | TECHNICAL FIELDS SEARCHED (IPC) H04N G06T G06G |

The present search report has been drawn up for all claims

| Place of search | Date of completion of the search | Examiner |
|---|---|---|
| The Hague | 16 February 2018 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 17305645 A